# EUROPEAN PATENT SPECIFICATION

(11) **EP 1 727 389 B1**
(45) Date of publication and mention of the grant of the patent: **18.07.2012**
(21) Application number: 06380105.4
(22) Date of filing: 08.05.2006
(51) Int. Cl.: H04L 29/06, H04W 4/24, H04W 12/12, H04W 12/06, H04W 64/00

(54) **System and method of locating and identifying a subscriber of mobile equipment within a predetermined area**
System und Verfahren zum Finden und Identifizieren eines Teilnehmers eines mobilen Geräts in einem vorbestimmten Bereich
Système et procédé pour localiser et identifier un abonné d'équipement mobile dans une zone prédéterminée

(30) Priority: 26.05.2005 ES 200501275
(43) Date of publication of application: 29.11.2006
(73) Proprietor: Vodafone Group PLC, Newbury Berkshire RG14 2FN (GB); Vodafone Espana, S.A., 28108 Alcobendas, Madrid (ES)
(72) Inventor: Bedialauneta Millan, Mario, 28042 Madrid (ES); Velasco Arangüena, Juan, 28260 - Galapagar - (ES)
(74) Representative: Carvajal y Urquijo, Isabel

(56) References cited:
- WO-A-2004/003801
- US-A1- 2003 039 242
- US-A1- 2004 224 682

## Description

### Field of the Invention

This invention is encompassed within the field of mobile telecommunications, and more specifically in the possibility of locating a subscriber of a mobile terminal, and in the application of this information to use one way of billing or another to said subscriber of the mobile terminal.

### Background of the Invention

In the field of telecommunications it is possible to speak of "mobile equipment" of a subscriber comprising, both in the GSM (Global System for Mobile Communication) system and in GPRS (General Packet Radio Service) and UTMS (Universal Mobile Telecommunications System- also called Third Generation Mobile Telephony) systems:
- on one hand a terminal (which is what is many times referred to as the "mobile telephone" and includes a casing, display, keypad, power source and various circuits); and
- on the other hand the smart card.

The smart card comprises an electronic device similar to a PC in terms of its architecture, but inserted in a plastic card. Smart cards are based on an integrated circuit having the following elements embedded therein:
- CPU: Central Processing Unit. It may also incorporate a cryptoprocessor.
- Volatile Memory: this is the memory unit used for temporary data storage. It is usually RAM memory.
- Non-Volatile Memory: this memory permanently stores data. It is used for storing directories, files and applications or programs as occurs in the hard drive of a conventional PC.

As of today there are some possibilities of determining with more or less accuracy the location of a subscriber of a mobile terminal. The following examples are cited:
- **Cell ID** or another type of localization used by the mobile network. It is based on the subscriber location information that the mobile network has, and regarding subscriber billing, it will be of one type or another depending on the information provided by the mobile network. The problem with these systems is inaccuracy, being an average of about 500 meters in diameter.
- GPS, which is a much more exact system than the previous one but with more drawbacks, such as not having direct visibility with satellites inside houses, or the difficulty of registering the geographical extension of the house in the systems. GPS functionality in mobile terminals would further be required.

PCT patent publication WO 02/099758 discloses an automated payment system comprising means of storing financial data of a subscriber and a first beacon capable of wireless message transmission (such as Bluetooth), as well as a portable device capable of receiving such message transmission. The identifier of the subscriber of the portable device is checked and should there be a match between the identifier sent by the subscriber and the stored identifier, a green light signal is sent to the beacon so that it releases the paid-for goods or services.

It is well known that abbreviations and acronyms are frequently used in the field of mobile telephony. A glossary of acronyms/terms used throughout this specification is provided below:
- GPS: Global Positioning System
- GSM: Global System for Mobile Communications
- IMEI: International Mobile Equipment Identification
- IMSI: International Mobile Subscriber Identity
- OTA: Over the Air
- SIM: Subscriber Identification Module
- SMS: Short Message
- UMTS: Universal Mobile Telecommunications System
- USSD: Unstructured Supplementary Service Data
- WiFi: Wireless Fidelity

### Description of the Invention

The invention relates to a system of locating a subscriber of a mobile terminal within a predetermined area according to claim 1, and to a method according to claim 14. Preferred embodiments of the system and method are defined in the dependent claims.

This invention provides a system that allows being able to locate and identify a subscriber of a mobile terminal within a predetermined area in a simple manner and not limited to GPS system reliability or availability.

According to a first aspect of the invention, it relates to a system for locating a subscriber of mobile equipment within a predetermined area. The system comprises.
- beacon equipment for defining said predetermined area including:

- a device with local area access technology configured to define said predetermined area,
- a device with wireless access to a mobile telephony network,
- a smart card with a subscriber identity module,
- means for storing at least a first access code to said predetermined area associated to said subscriber,
   and said mobile equipment includes:
- said local area access technology, and
- means of storing at least a second access code to said predetermined area.

The system further comprises:
- means for detecting the entrance of said mobile equipment in the predetermined area,
- means for establishing, as a response to said detection, secure communication between mobile equipment and beacon equipment,
- means for authenticating and registering said mobile terminal in the predetermined area by means of checking for a match between said first and second access codes of the beacon equipment and mobile equipment, respectively.

Communication is considered to be secure when the necessary means are used so that it cannot be accessed so as to know or modify its contents by anyone other than the participants in said communication.

Said mobile equipment is preferably mobile telephony equipment.

In this case said first and second access codes to said predetermined area may be defined by a mobile telephony network.

The system of locating of the invention may further comprise means of notifying the mobile equipment of its registration within the predetermined area.

Said device with wireless access to a mobile telephony network may be a GSM and/or UMTS device and may be identified by an IMEI identity.

Said first and second access codes may be formed by at least one IMSI identity.

The means for detecting the entrance of said mobile equipment in the predetermined area may be included in the beacon equipment, or in the mobile equipment. That is, it may be the beacon equipment that detects the mobile equipment, or vice versa.

It may also occur that said detection of the entrance of said mobile equipment in the predetermined area is carried out in response to a request from the subscriber of the mobile equipment, that is, manual detection is carried out.

The beacon equipment preferably includes means of sending information relating to the entrance of said subscriber in the predetermined area established by said beacon equipment.

For the purpose of increasing the scope or field of said predetermined area said beacon equipment may include means of connection with at least one repeater.

Preferably the beacon equipment further includes means of storing a predetermined list of subscribers with access to said predetermined area.

According to a preferred embodiment of the invention, the latter relates to a system of billing or charging a subscriber of a mobile telephony equipment, including means of sending a parameter indicative of being registered in said predetermined area from said mobile equipment to the mobile telephony network through a signaling message that is included within the calling procedure, such as the call start SETUP message.

That is, another object of the system of the invention is to provide the possibility of billing the subscriber of a mobile terminal differently when said subscriber makes a call within a predetermined area (for example at home or in the office) from when the subscriber is outside of said area. Therefore the intention is to provide a system that allows billing at price "X" when the subscriber is, for example, at home, and at price "Y" when the subscriber is out.

According to a second aspect of the invention, the latter relates to a method of locating a subscriber of mobile equipment within a predetermined area comprising:
- defining said predetermined area by means of a device with local area access technology forming part of beacon equipment, the mobile equipment comprising said local area access technology,
- storing first and second access codes to said predetermined area in said beacon equipment and in said mobile equipment, respectively,
- detecting the entrance of said mobile equipment in the predetermined area,
- establishing secure communication between said mobile equipment and said beacon equipment,
- checking if said first and second access codes match.

Said mobile equipment is preferably mobile telephony equipment.

According to a preferred embodiment, the mobile telephony network defines said first and second access codes to said predetermined area.

The method may comprise notifying the mobile equipment of its registration within the predetermined area.

Detection of the entrance of said mobile equipment in the predetermined area may be carried out by the beacon equipment or by the mobile equipment.

Said detection of the entrance of said mobile equipment in the predetermined area may be requested manually by the subscriber of the mobile equipment.

Information relating to the entrance of said subscriber in the predetermined area is preferably sent.

The method of locating of the invention may comprise the beacon equipment being connected to at least one repeater such that the scope of said predetermined area is increased.

According to a preferred embodiment, the invention provides the use of a method of location as previously indicated for billing said subscriber of mobile telephony equipment according to whether or not the subscriber is within the predetermined area. In said embodiment, a parameter indicative of being registered in said predetermined area is sent from said mobile equipment to the mobile telephony network through a signaling message that is included in the calling procedure, such as the call start SETUP message.

### Brief Description of the Drawings

A series of drawings aiding to better understand the invention and which are expressly related to a preferred embodiment of said invention, representing a nonlimiting example thereof, is very briefly described below.

Figure 1 shows a scheme of the beacon equipment defining a predetermined area

Figure 2 schematically shows the overall operation of the system of the invention.

### Description of a Preferred Embodiment of the Invention

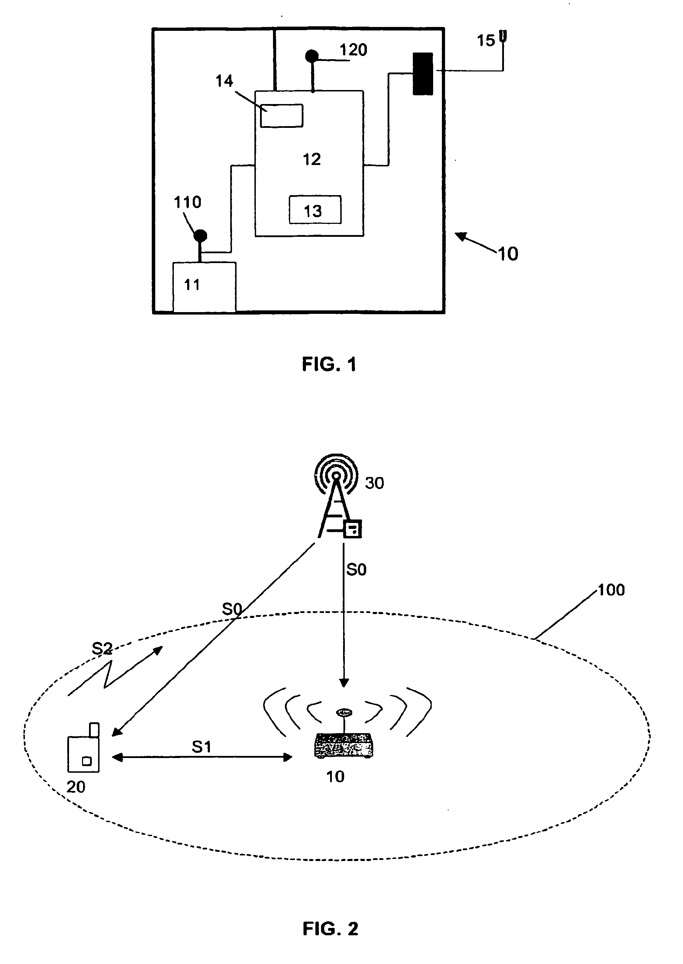

It is first necessary to demarcate a predetermined area 100 (shown with a dashed line in Figure 2) where the subscriber of the mobile terminal is to be located (for example, the area covering the house of said subscriber or his/her office). To that end the system of the invention provides beacon equipment 10 such as the one shown in Figure 1.

Figure 1 shows the main components of the beacon equipment 10, which are:
- A Bluetooth device 11 (or any local area radio access, such as WiFi) with its corresponding antenna 110. This device demarcates the extension of the predetermined area. The scope of the local radio access determines the predetermined area. In the case of using Bluetooth, it will depend on the type of Bluetooth used; for example, it may approximately coincide with the dimensions of a mid-large sized house.
- A GSM and/or UMTS device 12 with its corresponding antenna 120. Its functionalities are very similar to those of a mobile telephony terminal; it includes a CPU 14 with the particularity that it includes software housing the intelligence of the service to be given to the subscriber, such as the service of a possible different billing according to whether or not the subscriber is within the predetermined area. On one hand this device allows communication with the GSM or UMTS mobile network 30, and on the other hand communication with the mobile terminals entering the predetermined area, authenticating them and determining if they may or not make use of a service, such as the area-based billing service.
- A smart card with a Subscriber Identity Module SIM 13 such that after switching on the beacon equipment, the equipment connects to the GSM or UMTS network, being able to be accessed remotely like any mobile telephone.

The beacon equipment is identified by an IMEI like any mobile telephone.

Like the smart card SIM 13, the GSM and/or UMTS device 12 is required for being able to remotely access the service such that access codes and user names or any useful variable can be sent to it.

The smart card SIM is important because thanks to it, the equipment can be controlled remotely. It is a wireless device and can only be accessed through the radio stations of the operator of the mobile telephony network.

As is shown in Figure 1, the beacon equipment 10 further has a power source 15 for its operation.

For the system of the invention to work, it is necessary that the mobile terminal/s wishing to access the predetermined area have the following functionalities:
- Bluetooth (or local area access technology that has been included in the beacon equipment).
- Registration in the predetermined area: this functionality allows the mobile to communicate with the beacon equipment, and identify and authenticate itself as a legitimate subscriber of a certain service.

In the embodiment shown, the mobile terminal further has the following functionalities:
- Notification in a predetermined area: once the mobile terminal has entered the predetermined area and has been registered, the subscriber of the mobile telephone who is in the predetermined area is notified, such that, for example, the call is billed differently.
- Call in predetermined area: this functionality allows the mobile to inform the GSM or UMTS network in each call it makes that it is in the predetermined area. The mobile telephony operator may thus bill the call made in said zone differently.

To do this, the mobile terminal has to include in the SETUP message specified in the 3GPP TS 24.008 standard, a parameter indicating that it is a call within the predetermined area. To that end the parameter defining the standard that best meets the needs of the service will be used (although in the standard its use is not specified for a call billing service).

That is, in this case the beacon equipment indicates to the mobile terminal that it is within the predetermined area, and it is the mobile terminal that indicates this to the network so that it is billed differently.

Figure 2 schematically shows the overall operation of the system of the invention.

The first step S0 is to send codes both to the terminals (several terminals may subscribe to the same service) and the beacon. Said sending can be done through any of the procedures permitted by the mobile telephony network, such as through OTA, SMS, USSD, IP or any other system accepted by the mobile telephony network.

The sending of said code will be done as many times as the operator considers it to be appropriate, and at any time (it is not necessary for the mobile terminal to be in the predetermined area).

In addition to sending said code, a subscriber identity such as the mobile telephone number (MSISDN) or the IMSI may be sent. It is therefore possible to have service subscription control.

In the embodiment shown, the code is made up of a combination of the IMEI of the beacon equipment, the IMSI of its SIM and a secure part. Said code allows only those customers who subscribe to a certain service to perform the next step S1, registration in the predetermined area.

The registration process (S1) is established between the mobile terminal and the beacon equipment. It can obviously only be carried out when communication between both is possible, i.e. when the mobile terminal is within coverage of the beacon equipment (Bluetooth or another chosen technology).

The registration process includes a series of messages between the beacon equipment and the mobile terminal:
1. Establishing a secure access connection (for example a Bluetooth connection) between the mobile terminal and beacon equipment.
2. Requesting the code from the mobile terminal to the beacon equipment.
3. Sending the code from the beacon equipment to the mobile terminal.

It is also possible that the beacon equipment makes the first request.

Once the mobile terminal has received the code from the beacon equipment, it checks that it is the same access code as the one it has stored and if it is, registration has been correctly performed.

After registration, the special billing service customer or subscriber is informed by means of an icon or message on the mobile terminal display that he or she is in the predetermined area, and therefore his or her calls after this time will be given a special processing.

Registration may be done either manually by the subscriber of the mobile terminal or automatically when the mobile terminal enters the equipment coverage area (predetermined area).

The call process within the predetermined area is finally carried out (S2). It is the same as a normal GSM or UMTS telephony call with the exception that the terminal is in the "Registered in a predetermined area" status, therefore it includes a parameter in the SETUP message specified in the 3GPP TS 24.008 standard, informing the network that it is in the predetermined area. Therefore the billing receipts generated in the switching centers may distinguish between calls made in and out of the predetermined area.

## Claims

1. A system of locating a subscriber of mobile equipment within a predetermined area, when said subscriber makes a telephony call within a predetermined area (100), **characterized in that** it comprises:
- beacon equipment (10) for defining said predetermined area including:
- a device (11) with local area access technology configured to define said predetermined area (100),
- a device (12) with wireless access to a mobile telephony network (30),
- a smart card with a subscriber identity module (13),
- means for storing at least a first access code to said predetermined area (100) associated to said subscriber,
and **in that** said mobile equipment (20) includes:
- said local area access technology, and
- means for storing at least a second access code to said predetermined area (100);
- means for informing the mobile telephony network (30) that the telephony call is a call made within the predetermined area (100);
further **characterized in that** the system comprises:
- means for detecting the entrance of said mobile equipment in the predetermined area,
- means for establishing, as a response to said detection, secure communication between mobile equipment and beacon equipment,
- means for authenticating and registering said mobile terminal in the predetermined area by means of checking for a match between said first and second access codes of the beacon equipment and mobile equipment, respectively.

2. A system according to claim 1, **characterized in that** said mobile equipment is mobile telephony equipment.

3. A system according to claim 2, **characterized in that** said first and second access codes to said predetermined area (100) are defined by a mobile telephony network (30).

4. A system according to any of the previous claims, **characterized in that** said device with wireless access to a mobile telephony network (30) is a GSM and/or UMTS device (12).

5. A system according to claim 4, **characterized in that** said GSM and/or UMTS device (12) is identified by an identity IMEI.

6. A system according to any of the previous claims, **characterized in that** the system further comprises means of notifying the mobile equipment of its registration within the predetermined area.

7. A system according to any of claims 2-6, **characterized in that** said first and second access codes are formed by at least one IMSI identity.

8. A system according to any of the previous claims, **characterized in that** said means for detecting the entrance of said mobile equipment in the predetermined area (100) are included in the beacon equipment.

9. A system according to any of claims 1-7, **characterized in that** said means for detecting the entrance of said mobile equipment in the predetermined area (100) are included in the mobile equipment.

10. A system according to any of the previous claims, **characterized in that** said detection of the entrance of said mobile equipment in the predetermined area (100) is in response to a request from the subscriber of the mobile equipment.

11. A system according to any of claims 1-10, **characterized in that** the beacon equipment includes means of sending information relating to the entrance of said subscriber in the predetermined area established by said beacon equipment.

12. A system according to any of claims 1-11, **characterized in that** said beacon equipment includes means of connecting with at least one repeater, such that the scope of said predetermined area is increased.

13. Use of a system of locating according to any of claims 2-12 for billing said subscriber of mobile telephony equipment (20), **characterized in that** it includes:
- means of sending a parameter indicative of being registered in said predetermined area from said mobile equipment (20) to the mobile telephony network (30) through a signaling message that is included in the calling procedure.

14. A method of locating a subscriber of mobile equipment (20) within a predetermined area (100), when said subscriber makes a telephony call within a predetermined area (100), comprising:
- defining said predetermined area by means of a device (11) with local area access technology forming part of beacon equipment (10), the mobile equipment (20) comprising said local area access technology,
- storing first and second access codes to said predetermined area in said beacon equipment and in said mobile equipment, respectively,
- detecting the entrance of said mobile equipment in the predetermined area,
- establishing secure communication between said mobile equipment and said beacon equipment,
- checking if said first and second access codes match,
- informing the mobile telephony network (30) that the telephony call is a call made within the predetermined area (100).

15. A method according to claim 14, **characterized in that** said mobile equipment is mobile telephony equipment.

16. A method according to claim 15, **characterized in that** the mobile telephony network (30) defines said first and second access codes to said predetermined area (100).

17. A method according to any of claims 14-16, **characterized in that** it comprises notifying the mobile equipment of its registration in the predetermined area.

18. A method according to any of claims 14-17, **characterized in that** detection of the entrance of said mobile equipment in the predetermined area is carried out by means of the beacon equipment.

19. A method according to any of claims 14-17, **characterized in that** detection of the entrance of said mobile equipment in the predetermined area is carried out by the mobile equipment.

20. A method according to any of claims 14-19, **characterized in that** detection of the entrance of said mobile equipment in the predetermined area is requested by the subscriber of the mobile equipment.

21. A method according to any of claims 14-20, **characterized in that** information relating to the entrance of said subscriber in the predetermined area is sent.

22. A method according to any of claims 14-21, **characterized in that** the beacon equipment is connected to at least one repeater, such that the scope of said predetermined area is increased.

23. Use of a method of locating according to any of claims 14-22 for billing said subscriber of the mobile telephony equipment (20), **characterized in that** it includes
- sending a parameter indicative of being registered in said predetermined area from said mobile equipment (20) to the mobile telephony network (30) through a signaling message that is included in the calling procedure.

## Patentansprüche

1. System zum Finden eines Abonnenten eines mobilen Geräts in einem vorbestimmten Gebiet, wobei der genannte Abonnent einen Telefonanruf in einem vorbestimmten Gebiet (100) durchführt, **dadurch gekennzeichnet, dass** es Folgendes umfasst:
- eine Funkbake (10) zum Definieren des genannten vorbestimmten Gebiets, die Folgendes beinhaltet:
- ein Gerät (11) mit lokaler Zugangstechnologie, konfiguriert zum Definieren des genannten vorbestimmten Gebiets (100),
- ein Gerät (12) mit Funkzugang zu einem Mobilfunknetz (30),
- eine Chipkarte mit einem Abonnentenidentitätsmodul (13),
- Mittel zum Speichern von wenigstens einem ersten Zugangscode zu dem genannten vorbestimmten Gebiet (100) in Verbindung mit dem genannten Abonnenten,
und dadurch, dass das genannte mobile Gerät (20) Folgendes beinhaltet:
- die genannte lokale Zugangstechnologie, und
- Mittel zum Speichern von wenigstens einem zweiten Zugangscode zu dem genannten vorbestimmten Gebiet (100);
- Mittel zum Informieren des Mobilfunknetzes (30) darüber, dass der Telefonanruf in dem vorbestimmten Gebiet (100) durchgeführt wird;
ferner **dadurch gekennzeichnet, dass** das System Folgendes umfasst:
- Mittel zum Erkennen des Eintritts des genannten mobilen Geräts in das vorbestimmte Gebiet,
- Mittel zum Aufbauen, als Reaktion auf die genannte Erkennung, einer sicheren Kommunikation zwischen dem mobilen Gerät und der Funkbake,
- Mittel zum Authentifizieren und Registrieren des genannten mobilen Endgeräts in dem vorbestimmten Gebiet durch Prüfen auf Übereinstimmung zwischen dem genannten ersten und zweiten Zugangscode der Funkbake bzw. des mobilen Geräts.

2. System nach Anspruch 1, **dadurch gekennzeichnet, dass** das genannte mobile Gerät ein Mobilfunkgerät ist.

3. System nach Anspruch 2, **dadurch gekennzeichnet, dass** der genannte erste und zweite Zugangscode zu dem genannten vorbestimmten Gebiet (100) von einem Mobilfunknetz (30) definiert werden.

4. System nach einem der vorherigen Ansprüche, **dadurch gekennzeichnet, dass** das genannte Gerät mit Funkzugang zu einem Mobilfunknetz (30) ein GSM- und/oder ein UMTS-Gerät (12) ist.

5. System nach Anspruch 4, **dadurch gekennzeichnet, dass** das genannte GSM- und/oder UMTS-Gerät (12) durch eine Identitäts-IMEI-Nummer identifiziert wird.

6. System nach einem der vorherigen Ansprüche, **dadurch gekennzeichnet, dass** das System ferner Mittel zum Benachrichtigen des mobilen Geräts über seine Registrierung in dem vorbestimmten Gebiet umfasst.

7. System nach einem der Ansprüche 2-6, **dadurch gekennzeichnet, dass** der genannte erste und zweite Zugangscode durch wenigstens eine IMSI-Identität gebildet werden.

8. System nach einem der vorherigen Ansprüche, **dadurch gekennzeichnet, dass** das genannte Mittel zum Erkennen des Eintritts des genannten mobilen Geräts in das vorbestimmte Gebiet (100) in der Funkbake enthalten ist.

9. System nach einem der Ansprüche 1-7, **dadurch gekennzeichnet, dass** das genannte Mittel zum Erkennen des Eintritts des genannten mobilen Geräts in das vorbestimmte Gebiet (100) in dem mobilen Gerät enthalten ist.

10. System nach einem der vorherigen Ansprüche, **dadurch gekennzeichnet, dass** die genannte Erkennung des Eintritts des genannten mobilen Geräts in das vorbestimmte Gebiet (100) als Reaktion auf eine Anforderung vom Abonnenten des mobilen Geräts erfolgt.

11. System nach einem der Ansprüche 1-10, **dadurch gekennzeichnet, dass** die Funkbake Mittel zum Senden von Informationen über den Eintritt des genannten Abonnenten in das durch die genannte Funkbake definierte vorbestimmte Gebiet beinhaltet.

12. System nach einem der Ansprüche 1-11, **dadurch gekennzeichnet, dass** die genannte Funkbake Mittel zur Verbindung mit wenigstens einem Repeater beinhaltet, so dass der Umfang des genannten vorbestimmten Gebiets vergrößert wird.

13. Verwendung eines Systems zum Finden nach einem der Ansprüche 2-12 zur Rechnungsstellung an die genannten Abonnenten des Mobilfunkgerätes (20), **dadurch gekennzeichnet, dass** es Folgendes beinhaltet:
- Mittel zum Senden eines Parameters, der eine Registrierung in dem genannten vorbestimmten Gebiet anzeigt, von dem genannten mobilen Gerät (20) zum Mobilfunknetz (30) durch eine im Anrufvorgang enthaltene Signalisierungsnachricht.

14. Verfahren zum Finden eines Abonnenten eines mobilen Geräts (20) in einem vorbestimmten Gebiet (100), wenn der genannte Abonnent einen Telefonanruf in dem vorbestimmten Gebiet (100) durchführt, das Folgendes beinhaltet:
- Definieren des genannten vorbestimmten Gebiets mittels eines Gerätes (11) mit lokaler Zugangstechnologie, das Teil einer Funkbake (10) ist, wobei das mobile Gerät (20) die genannte lokale Zugangstechnologie umfasst,
- Speichern eines ersten und zweiten Zugangscodes zu dem genannten vorbestimmten Gebiet in der genannten Funkbake bzw. in dem genannten mobilen Gerät,
- Erkennen des Eintritts des genannten mobilen Geräts in das vorbestimmte Gebiet,
- Aufbauen einer sicheren Kommunikation zwischen dem genannten mobilen Gerät und der genannten Funkbake,
- Prüfen, ob der genannte erste und zweite Zugangscode übereinstimmen,
- Informieren des Mobilfunknetzes (30), dass der Telefonanruf ein Anruf ist, der in dem vorbestimmten Gebiet (100) durchgeführt wird.

15. Verfahren nach Anspruch 14, **dadurch gekennzeichnet, dass** das genannte mobile Gerät ein Mobilfunkgerät ist.

16. Verfahren nach Anspruch 15, **dadurch gekennzeichnet, dass** das Mobilfunknetz (30) den genannten ersten und zweiten Zugangscode zu dem genannten vorbestimmten Gebiet (100) definiert.

17. Verfahren nach einem der Ansprüche 14-16, **dadurch gekennzeichnet, dass** es das Benachrichtigen des mobilen Geräts über seine Registrierung in dem vorbestimmten Gebiet beinhaltet.

18. Verfahren nach einem der Ansprüche 14-17, **dadurch gekennzeichnet, dass** die Erkennung des Eintritts des genannten mobilen Geräts in das vorbestimmte Gebiet durch die Funkbake erfolgt.

19. Verfahren nach einem der Ansprüche 14-17, **dadurch gekennzeichnet, dass** die Erkennung des Eintritts des genannten mobilen Geräts in das vorbestimmte Gebiet durch das mobile Gerät erfolgt.

20. Verfahren nach einem der Ansprüche 14-19, **dadurch gekennzeichnet, dass** die Erkennung des Eintritts des genannten mobilen Geräts in das vorbestimmte Gebiet vom Abonnenten des mobilen Geräts angefordert wird.

21. Verfahren nach einem der Ansprüche 14-20, **dadurch gekennzeichnet, dass** Informationen über den Eintritt des genannten Abonnenten in das vorbestimmte Gebiet gesendet werden.

22. Verfahren nach einem der Ansprüche 14-21, **dadurch gekennzeichnet, dass** die Funkbake mit wenigstens einem Repeater verbunden wird, so dass der Umfang des genannten vorbestimmten Gebiets vergrößert wird.

23. Anwendung eines Verfahrens zum Finden nach einem der Ansprüche 14-22 zur Rechnungsstellung an den genannten Abonnenten des Mobilfunkgeräts (20), **dadurch gekennzeichnet, dass** es Folgendes beinhaltet:
- Senden eines Parameters, der die Registrierung in dem genannten vorbestimmten Gebiet anzeigt, von dem genannten mobilen Gerät (20) zu dem Mobilfunknetz (30) durch eine Signalisierungsnachricht, die in dem Anrufvorgang enthalten ist.

## Revendications

1. Système destiné à localiser un abonné d'équipement mobile dans une zone prédéterminée, lorsque ledit abonné fait un appel téléphonique dans une zone prédéterminée (100), **caractérisé en ce qu'**il comprend :
- un équipement balise (10) pour définir ladite zone prédéterminée, englobant :
- un dispositif (11) doté d'une technologie d'accès local configurée pour définir ladite zone prédéterminée (100),
- un dispositif (12) offrant un accès sans fil à un réseau de téléphonie mobile (30),
- une carte à puce avec un module d'identité d'abonné (13),
- des moyens pour stocker au moins un premier code d'accès à ladite zone prédéterminée (100) associée audit abonné,
et **en ce que** ledit équipement mobile (20) englobe :
- ladite technologie d'accès local, et
- des moyens pour stocker au moins un second code d'accès à ladite zone prédéterminée (100) ;
- des moyens pour informer le réseau de téléphonie mobile (30) que l'appel téléphonique est un appel qui est effectué dans la zone prédéterminée (100) ;
**caractérisé en outre en ce que** le système comprend :
- des moyens pour détecter l'entrée dudit équipement mobile dans la zone prédéterminée,
- des moyens pour établir, à titre de réponse à ladite détection, une communication sécurisée entre l'équipement mobile et l'équipement balise,
- des moyens pour authentifier et enregistrer ledit terminal mobile dans la zone prédéterminée grâce à la vérification visant à trouver une concordance entre lesdits premier et second codes d'accès de l'équipement balise et de l'équipement mobile, respectivement.

2. Système selon la revendication 1, **caractérisé en ce que** ledit équipement mobile est un équipement de téléphonie mobile.

3. Système selon la revendication 2, **caractérisé en ce que** lesdits premier et second codes d'accès à ladite zone prédéterminée (100) sont définis par un réseau de téléphonie mobile (30).

4. Système selon l'une quelconque des revendications précédentes, **caractérisé en ce que** ledit dispositif offrant un accès sans fil à un réseau de téléphonie mobile (30) est un dispositif GSM et/ou UMTS (12).

5. Système selon la revendication 4, **caractérisé en ce que** ledit dispositif GSM et/ou UMTS (12) est identifié par une IMEI identitaire.

6. Système selon l'une quelconque des revendications précédentes, **caractérisé en ce que** le système comprend en outre des moyens permettant de signaler à l'équipement mobile son enregistrement dans la zone prédéterminée.

7. Système selon l'une quelconque des revendications 2 à 6, **caractérisé en ce que** lesdits premier et second codes d'accès sont constitués d'au moins une identité IMSI.

8. Système selon l'une quelconque des revendications précédentes, **caractérisé en ce que** lesdits moyens pour détecter l'entrée dudit équipement mobile dans la zone prédéterminée (100) sont inclus dans l'équipement balise.

9. Système selon l'une quelconque des revendications 1 à 7, **caractérisé en ce que** lesdits moyens pour détecter l'entrée dudit équipement mobile dans la zone prédéterminée (100) sont inclus dans l'équipement mobile.

10. Système selon l'une quelconque des revendications précédentes, **caractérisé en ce que** ladite détection de l'entrée dudit équipement mobile dans la zone prédéterminée (100) se fait en réponse à une demande émanant de l'abonné de l'équipement mobile.

11. Système selon l'une quelconque des revendications 1 à 10, **caractérisé en ce que** l'équipement balise englobe des moyens permettant d'envoyer des informations relatives à l'entrée dudit abonné dans la zone prédéterminée établie par ledit équipement balise.

12. Système selon l'une quelconque des revendications 1 à 11, **caractérisé en ce que** ledit équipement balise englobe des moyens pour assurer la connexion avec au moins un répéteur, de sorte que la portée de ladite zone prédéterminée soit augmentée.

13. Utilisation d'un système de localisation selon l'une quelconque des revendications 2 à 12 destiné à facturer ledit abonné d'équipement de téléphonie mobile (20), **caractérisée en ce qu'**elle comprend :
- des moyens permettant d'envoyer, à partir dudit équipement mobile (20) vers le réseau de téléphonie mobile (30), un paramètre indiquant l'enregistrement dans ladite zone prédéterminée par l'intermédiaire d'un message de signalisation qui est inclus dans la procédure d'appel.

14. Procédé destiné à localiser un abonné d'équipement mobile (20) dans une zone prédéterminée (100), lorsque ledit abonné fait un appel téléphonique dans une zone prédéterminée (100), comprenant les opérations consistant à :
- définir ladite zone prédéterminée à l'aide d'un dispositif (11) doté d'une technologie d'accès local faisant partie intégrante d'un équipement balise (10), l'équipement mobile (20) englobant ladite technologie d'accès local,
- stocker un premier et un second codes d'accès à ladite zone prédéterminée dans ledit équipement balise et dans ledit équipement mobile, respectivement,
- détecter l'entrée dudit équipement mobile dans la zone prédéterminée,
- établir une communication sécurisée entre ledit équipement mobile et ledit équipement balise,
- vérifier si lesdits premier et second codes d'accès concordent,
- informer le réseau de téléphonie mobile (30) que l'appel téléphonique est un appel qui est effectué dans la zone prédéterminée (100).

15. Procédé selon la revendication 14, **caractérisé en ce que** ledit équipement mobile est un équipement de téléphonie mobile.

16. Procédé selon la revendication 15, **caractérisé en ce que** le réseau de téléphonie mobile (30) définit lesdits premier et second codes d'accès à ladite zone prédéterminée (100).

17. Procédé selon l'une quelconque des revendications 14 à 16, **caractérisé en ce qu'**il englobe l'opération consistant à signaler à l'équipement mobile son enregistrement dans la zone prédéterminée.

18. Procédé selon l'une quelconque des revendications 14 à 17, **caractérisé en ce que** la détection de l'entrée dudit équipement mobile dans la zone prédéterminée est réalisée au moyen de l'équipement balise.

19. Procédé selon l'une quelconque des revendications 14 à 17, **caractérisé en ce que** la détection de l'entrée dudit équipement mobile dans la zone prédéterminée est réalisée par l'équipement mobile.

20. Procédé selon l'une quelconque des revendications 14 à 19, **caractérisé en ce que** la détection de l'entrée dudit équipement mobile dans la zone prédéterminée est demandée par l'abonné de l'équipement mobile.

21. Procédé selon l'une quelconque des revendications 14 à 20, **caractérisé en ce que** des informations relatives à l'entrée dudit abonné dans la zone prédéterminée sont envoyées.

22. Procédé selon l'une quelconque des revendications 14 à 21, **caractérisé en ce que** l'équipement balise est connecté à au moins un répéteur, de sorte que la portée de ladite zone prédéterminée soit augmentée.

23. Utilisation d'un procédé de localisation selon l'une quelconque des revendications 14 à 22 destiné à facturer ledit abonné de l'équipement de téléphonie mobile (20), **caractérisée en ce qu'**elle comprend l'opération consistant à :
- envoyer, à partir dudit équipement mobile (20) vers le réseau de téléphonie mobile (30), un paramètre indiquant l'enregistrement dans ladite zone prédéterminée par l'intermédiaire d'un message de signalisation qui est inclus dans la procédure d'appel.
